**Europäisches Patentamt**

**European Patent Office**

**Office européen des brevets**

(19)

(11) Veröffentlichungsnummer : **0 165 436**
**B1**

(12)　　　　　　　　　　**EUROPÄISCHE PATENTSCHRIFT**

(45) Veröffentlichungstag der Patentschrift :
09.11.88

(51) Int. Cl.⁴ : **G 05 B 19/42, G 06 K 9/52**

(21) Anmeldenummer : **85105671.3**

(22) Anmeldetag : **09.05.85**

(54) **Verfahren zur speicherplatzsparenden Programmierung von Roboterbewegungen.**

(30) Priorität : **14.05.84 DE 3417868**

(43) Veröffentlichungstag der Anmeldung :
**27.12.85 Patentblatt 85/52**

(45) Bekanntmachung des Hinweises auf die Patenterteilung : **09.11.88 Patentblatt 88/45**

(84) Benannte Vertragsstaaten :
**AT BE CH FR GB IT LI NL SE**

(56) Entgegenhaltungen :
**FR-A- 2 393 359**
**US-A- 4 132 937**
**IEEE TRANSACTIONS ON COMPUTERS, Band C-21, Nr. 3, März 1972, Seiten 269-281, IEEE, New York, US; C.T. ZAHN et al.: "Fourier descriptors for plane closed curves"**

(73) Patentinhaber : **Deutsche Forschungs- und Versuchsanstalt für Luft- und Raumfahrt e.V.**
**Linder Höhe Postfach 90 60 58**
**D-5000 Köln 90 (DE)**

(72) Erfinder : **Arbter, Klaus, Dipl.-Ing.**
**Römertshofen Haus 2**
**D-8086 Moorenweis (DE)**

(74) Vertreter : **von Kirschbaum, Albrecht, Dipl.-Ing.**
**Hermann-Ehlers-Strasse 21a**
**D-8034 Germering (DE)**

**Beschreibung**

Die Erfindung betrifft ein Verfahren zur speicherplatzsparenden Programmierung von Roboterbewegungen und zur Kompensation dynamischer Bewegungsfehler bei der Ausführung der Roboterbewegungen.

Für eine Registrierung von Roboterbewegungen sind verschiedene Verfahren bekannt. So können beispielsweise zeitlich oder örtlich äquidistante Abtastwerte registriert werden. Oder aber die Roboterbewegung wird durch einen Polygonzug approximiert und (nichtäquidistante) Eckpunkte werden registriert. Bei einem weiteren bekannten Verfahren wird die Roboterbewegung durch Kreissegmente approximiert und gleichzeitig werden der Anfangspunkt, der Endpunkt und ein Zwischenpunkt je Segment registriert. Die tatsächliche Ausführung der Roboterbewegung erfolgt dann entweder durch unmittelbare Verwendung der registrierten Werte oder durch eine Interpolation zwischen diesen Werten entlang von Geraden oder Kreisen.

Die angeführten, bekannten Registrierverfahren führen jedoch nur in den Fällen zu einer guten Speicherausnützung, in denen die gewünschte Bahn durch längere Geradenstücke bzw. durch Kreisbögen hinreichend genau beschrieben werden kann. Eine solche Beschreibung einer Bahn ist jedoch bei glatten Bahnen mit wechselnder Krümmung nicht möglich. In einem solchen Fall müssen Abtastwerte in einer engen Folge, d. h. nahe beieinanderliegende Abtastwerte aufgenommen und registriert werden, um den Approximationsfehler klein zu halten.

Beim schnellen Durchlaufen einer vorgegebenen Bahn entstehen sogenannte dynamische Bewegungsfehler (Elastizität). Eine Möglichkeit zur Kompensation dynamischer Bewegungsfehler besteht darin, diese zu vermessen und aus den Meßergebnissen Korrektursignale abzuleiten. Die Korrektursignale gelten dann aber nur für diese eine Bahn und für die Bahngeschwindigkeit, bei welcher sie ermittelt wurden ; das bedeutet, die Korrektursignale müssen für jede Aufgabe neu bestimmt und registriert werden.

Gemäß der Erfindung soll daher ein Verfahren zur speicherplatzsparenden Programmierung von Roboterbewegungen und zur Kompensation dynamischer Bewegungsfehler bei der Ausführung der Roboterbewegungen geschaffen werden, bei welchem im Falle von glatten, gekrümmten Bahnen für die Registrierung solcher glatten, gekrümmten Bahnen eine Datenreduktion und anschließend möglichst einfach eine aufgabenunabhängige, geschwindigkeitsangepaßte Kompensation dynamischer Bewegungsfehler durchgeführt werden. Gemäß der Erfindung ist dies bei einem Verfahren der genannten Art durch die Verfahrensschritte im kennzeichnenden Teil des Patentanspruchs erreicht.

Bei dem erfindungsgemäßen Verfahren wird zuerst eine Referenzbahn in Form von Abtastwerten aufgenommen, welche anschließend gespeichert werden. Zur Reduzierung von Speicherraum werden die aufgenommenen und gespeicherten Abtastwerte mittels einer Fourieranalyse in eine Fouriermatrix $_0\underline{\underline{C}}$ transformiert, welche dann in einem Speicher abgelegt wird. Aus dieser Fouriermatrix $_0\underline{\underline{C}}$ können dann Fouriermatrizen für Bahnen gleicher Gestalt, jedoch beliebiger Lage und Orientierung allein durch eine lineare Koordinatentransformation in Form einer Fouriermatrix $_1\underline{\underline{C}}$ abgeleitet werden. Mit Hilfe des Dynamikmodells des jeweils verwendeten Roboters kann dann die abgeleitete Fouriermatrix $_1\underline{\underline{C}}$, angepaßt an die gewünschte Geschwindigkeit entsprechend modifiziert werden, so daß dadurch die dynamischen Bewegungsfehler des Roboters kompensiert sind. Zur Erstellung von Bahnkoordinaten, welchen dann der Roboter bei seiner Bewegung folgen kann, wird die modifizierte Fouriermatrix $\underline{\underline{C}}$ unter Vorgabe einer Bogenlänge (s) entsprechend der jeweils gewünschten Bahngeschwindigkeit (v) einer abschließenden Fourier-Synthese unterzogen.

Bei dem erfindungsgemäßen Verfahren werden somit Bahnen oder Trajektorien, welche durch die Roboterbewegungen nachvollzogen werden sollen, durch Matrizen repräsentiert, deren Elemente Fourierkoeffizienten stetiger Funktionen mit einer beschränkten Ableitung sind. Hierdurch wird im allgemeinen der Datenbestand im Vergleich zu einer bisher üblichen Repräsentation im Originalbereich durch äquidistante Abtastwerte drastisch reduziert. Hierbei ist der erforderliche Speicheraufwand nur noch vom Verlauf der Bahn oder Trajektorie und von dem zulässigen bzw. zugelassenen mittleren quadratischen Synthesefehler abhängig ; der Speicheraufwand ist jedoch im Unterschied zu den bisher bekannten Verfahren unabhängig von dem jeweils gewählten Aufnahmeverfahren. Für Trajektorien, die durch eine lineare Transformation ineinander übergeführt werden können, muß entsprechend dem erfindungsgemäßen Verfahren die Fouriermatrix nur einmal berechnet und dann in einem Speicher für Referenzbahnen abgespeichert werden. Bei Bedarf kann dann die lineare Transformation über den Fourierkoeffizienten ausgeführt werden. Wenn die Dynamik des verwendeten Roboters durch eine Übertragungsfunktion dargestellt werden kann, ist eine geschwindigkeitsabhängige Kompensation der Roboterdynamik im Spektralbereich möglich. Hierbei ist die Geschwindigkeit, mit welcher die Bahn oder Trajektorie durchlaufen wird, (quasi) kontinuierlich veränderlich.

Nachfolgend wird die Erfindung zuerst prinzipiell erläutert und dann anhand von bevorzugten Ausführungsbeispielen unter Bezugnahme auf die anliegenden Zeichnungen im einzelnen erläutert. Es zeigen :

Fig. 1 ein schematisches Blockdiagramm einer Anordnung zur Durchführung des erfindungsgemäßen Verfahrens ;

Fig. 2 ein Anwendungsbeispiel des erfindungsgemäßen Verfahrens zur Fourier-Synthese des Buchstabens « F », und

Fig. 3 eine Durchführung des erfindungsgemäßen Verfahrens unter Verwendung eines einfachen Kompensators für einen ASEA-Roboter (IRb6).

Zuerst wird das erfindungsgemäße Verfahren prinzipiell erläutert. Die Größen, welche eine Roboterbewegung festlegen, (z. B. kartesische Koordinaten, Gelenkwinkel, u. a.), werden zu einem N-dimensionalen Vektor

$$\underline{x} = (x_1, x_2, ..., x_N)^T \tag{1}$$

zusammengefaßt. Das hochgestellte T bezeichnet den transponierten Vektor.

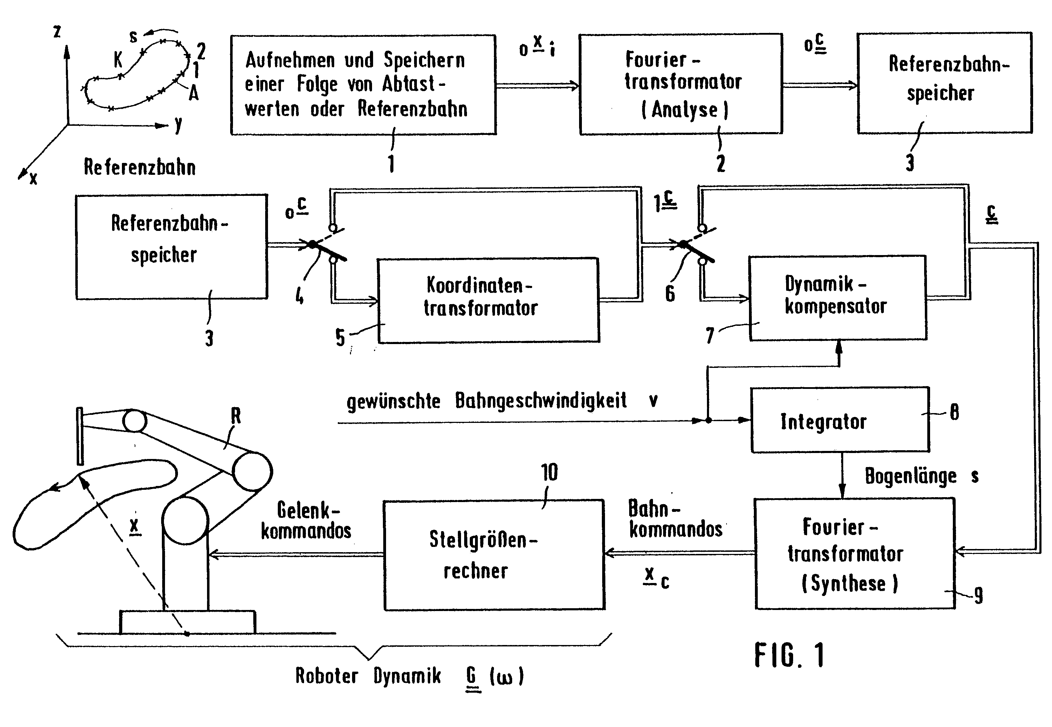

Eine « Bahn » oder eine « Trajektorie » ist die Menge aller $\underline{x}$, die ein Roboter während eines Arbeitsganges annimmt. Wenn der Roboter repetierend arbeitet, dann ist seine Trajektorie « geschlossen ». (Nachfolgend wird grundsätzlich eine geschlossene Trajektorie vorausgesetzt, da dies ohne Beschränkung der Allgemeinheit möglich ist, da offene Trajektorien immer zu geschlossenen ergänzt werden können, ohne daß das angefügte Stück zum Schließen einer Trajektorie später durchlaufen wird.) Eine Trajektorie beginnt und endet im sogenannten « Aufpunkt » A (siehe Fig. 1).

Während der Roboter eine Trajektorie durchläuft, legt er im N-dimensionalen Vektorraum einen « Weg » s(t) zurück, für welchen gilt :

$$s(t) = \int_0^t v(\tau)\, d\tau \tag{2}$$

wobei v die « Geschwindigkeit » entlang der Trajektorie ist. (Ist die Geschwindigkeit v negativ, so wird die Trajektorie lediglich « rückwärts » durchlaufen.) Für ein differentielles Weginkrement gilt dann :

$$ds = \sqrt{dx_1^2 + dx_2^2 + \cdots + dx_n^2}\,. \tag{3}$$

Der Weg für einen vollen Umlauf heißt « Länge » L der Trajektorie oder Bahn, welche als eine vektorielle, bezüglich der Länge L periodische Funktion der skalaren Größe s aufgefaßt wird. Für die Trajektorie

$$\underline{x}(s) = (x_1(s), x_2(s), ..., x_n(s))^T\,;\quad 0 \leqslant s \leqslant L \tag{4}$$

gilt nach Voraussetzung :

$$\underline{x}^T(s + iL) = \underline{x}^T(s)\quad \text{für}\quad i = 0, \pm 1, \pm 2, ... \tag{5}$$

Damit ist jedem Weg s(t) eindeutig ein Bahnpunkt zugeordnet, und die geschwindigkeitsunabhängige Koordination der Komponenten von $\underline{x}$ ist implizit gelöst. Außerdem bewirkt diese Parametrisierung, daß die Komponenten reelle, periodische stetige Funktionen des Weges s mit beschränkter Ableitung bezüglich des Weges s sind.

Solche Funktionen können durch rasch konvergierende Fourierreihen beliebig genau approximiert werden. Dies gilt vor allem für « glatte » gekrümmte Bahnen oder Trajektorien, da die Konvergenzgeschwindigkeit der Fourierreihe mit zunehmender Anzahl der verschwindenden Ableitungen der Originalfunktion steigt. Die nach dem M-ten Glied abgebrochene Fourierreihe $\hat{x}_n(s)$ der n-ten Komponente lautet :

$$\hat{x}_n(s) = c_{n,0} + 2\,\mathrm{Re}\left\{ \sum_{m=1}^{M} c_{n,m}\, e^{j\,2\,\pi m s/L} \right\} \tag{6}$$

Die Fourierreihe $\hat{x}_n(s)$ hat komplexe Fourierkoeffizienten $c_{n,m}$, welche lauten :

$$c_{n,m} = \frac{1}{L} \int_0^L x_n(s)\, e^{-j\,2\,\pi m s/L}\, ds \tag{7}$$

wobei n = 0, 1, ..., N und m = 0, 1, 2, ..., M ist. Die aus solchen komplexen Fourierkoeffizienten $c_{n,m}$ gebildete Matrix heißt « Fouriermatrix » und läßt sich folgendermaßen darstellen :

$$\underline{\underline{C}} = (c_{n,m})\quad \text{mit}\quad \begin{aligned} &n = 1, ..., N \\ &m = 1, ..., M \end{aligned} \tag{8}$$

Eine derartige Fouriermatrix repräsentiert die Bahn oder Trajektorie bis auf den Approximationsfehler

3

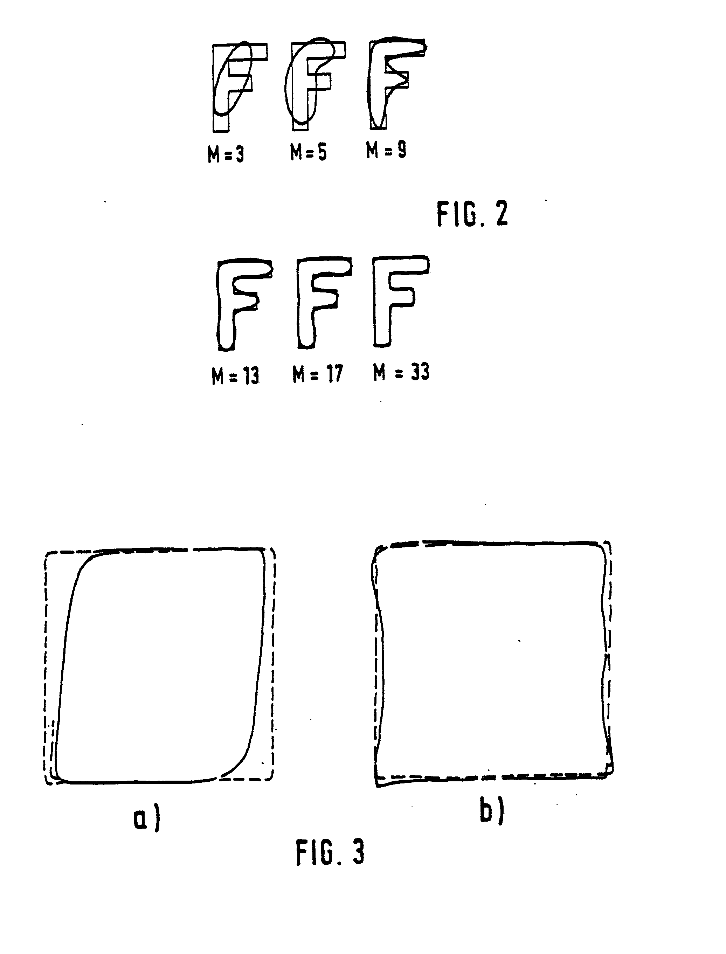

umkehrbar eindeutig, wobei der Approximationsfehler im Sinne des mittleren quadratischen Fehlers minimal ist. Er äußert sich hauptsächlich durch eine « Abrundung » von « Ecken » ; dies ist jedoch ein Effekt, der selten stört, vielmehr häufig erwünscht ist, da hierdurch beispielsweise die Roboterantriebe geschont werden (siehe beispielsweise Fig. 2).

Die Fourierkoeffizienten sind hierbei für jede Trajektorie unabhängig vom Aufnahmeverfahren. Die erforderliche Anzahl der Fourierkoeffizienten hängt lediglich vom Verlauf der Trajektorie und vom zulässigen, mittleren quadratischen Synthesefehler ab. Wird dagegen, wie bei den bisher bekannten Verfahren eine Bahn oder Trajektorie durch Abtastwerte repräsentiert, so hängt deren Dichte oft von dem gewünschten Geschwindigkeitsverlauf ab. Abgesehen von Sonderfällen, wie beispielsweise einer vollständigen Kreisbahn, wo zwei Koeffizienten je Komponente ausreichen, ist der Speicheraufwand für Fourierkoeffizienten ungefähr demjenigen gleich, der benötigt würde, um im Sinne eines quadratischen Fehlerkriteriums optimale Abtastwerte zu speichern.

Für die praktische Anwendung hat dies zur Konsequenz, daß eine Vorverarbeitung zur Datenreduktion nicht erforderlich ist, daß andererseits aber eine Datenmehrung im Originalbereich, sofern sie einer Glättung dient (beispielsweise eine Spline-Interpolation), das Konvergenzverhalten der Fourierreihe verbessert, und damit den erforderlichen Speicherbedarf für die Fourierkoeffizienten reduziert.

Die Klasse aller Trajektorien $\underline{x}(s)$, die durch eine lineare Abbildung ineinander übergeführt werden können, kann durch die Fouriermatrix $_0\underline{C}$ einer einzigen Referenzbahn 0 $\underline{x}(s)$ repräsentiert werden. Mit

$$_1\underline{x}(s) = \underline{A} \cdot {}_0\underline{x}(s) + \underline{b} \tag{9}$$

gilt nämlich

$$_1\underline{C} = \underline{A}\,{}_0\underline{C} + [\underline{b}, \underline{0}, ..., \underline{0}] \tag{10}$$

wobei $\underline{A}$ eine Matrix, die die räumliche Dehnung beschreibt, und $\underline{b}$ einen Verschiebungsvektor bedeuten.

Für eine Anwendung hat dies die Konsequenz, daß in einer « Trajektorienbibliothek » beispielsweise in Form eines Referenzbahnspeichers nur der Speicherumfang für den Repräsentanten $({}_0\underline{C})$ benötigt wird ; die lineare Abbildung selbst jedoch vor der Synthese, welche « off-line » stattfindet, mit Hilfe eines reduzierten Datensatzes ausgeführt werden kann (siehe Fig. 1).

Die Roboter-Dynamik soll nunmehr (näherungsweise) durch komplexe Übertragungsfunktionen $g_{i,j}(\omega)$ der Kreisfrequenz $\omega$ beschrieben werden ; dies wird im allgemeinen mit Dynamik-Modell des Roboters bezeichnet. Die Indizes i, j bedeuten, daß die Übertragungsfunktion die Wirkung auf die i-te Vektorkomponente der Trajektorie bei Erregung durch die j-te Vektorkomponente beschreibt. Die nachstehend wiedergegebene Matrix

$$\underline{G}(\omega) = (g_{i,j}(\omega)) \tag{11}$$

in welcher die Übertragungsfunktionen für den momentanen Arbeitspunkt bzw. -bereich zusammengefaßt sind, heißt « Übertragungsmatrix ». Unter der Annahme einer konstanten Geschwindigkeit v entlang der Trajektorie und mit

$$\omega_m = m\,2\,\pi f_0, \qquad f_0 = 1/T \quad \text{und} \quad T = L/v \tag{12}$$

wird dann eine indizierte Matrixfolge erhalten :

$$\underline{G}_m = \underline{G}(m\,2\pi v/L) \tag{13}$$

Eine Matrixfolge $\underline{G}_m{}^+ : m = 0, 1, ... M$ heißt « Kompensator », wenn sie die Bedingung erfüllt :

$$\underline{G}_m^+\,\underline{G}_m = \underline{1} \quad \text{für} \quad m = 0, 1, ..., M \tag{14}$$

Die Roboterdynamik wird (innerhalb des Gültigkeitsbereichs des Dynamikmodells) geschwindigkeitsabhängig kompensiert, durch Multiplikation der m-ten Kompensator-Matrix $\underline{G}_m{}^+$ mit der m-ten Spalte der Fouriermatrix der Nominaltrajektorie $_1\underline{C}_m$. Für die Spalten der Fouriermatrix $\underline{C}$ der kompensierten Trajektorie $\underline{x}_c(s)$ gilt dann :

$$\underline{c}_m = \underline{G}_m^+\,{}_1\underline{c}_m \quad \text{für} \quad m = 0, 1, ..., M \tag{15}$$

Die um dynamische Bewegungsfehler kompensierte Trajektorie $\underline{x}_c(t_k)$ zu diskreten Zeitpunkten $t_k$ folgt aus der Fourier-Synthese mit $s = s_k$, wobei $s_k$ entsprechend dem gewünschten Geschwindigkeitsverlauf durch Integration bestimmt wird (siehe Gl. (2)). Eine Trajektorie kann durch geeignete Wahl eines Anfangswertes $S_0$ bzw. des Aufpunktes A an beliebiger Stelle begonnen werden. Um unabhängig von konstruktiven Merkmalen des jeweils verwendeten Roboters zu einer einheitlichen Darstellung der

4

Dynamik zu gelangen, wird die Berechnung des Steuersignals (beispielsweise Steuerinkremente) als Bestandteil des Roboter-Dynamikmodells aufgefaßt.

Nunmehr wird der Ablauf des erfindungsgemäßen Verfahrens anhand eines in Fig. 1 dargestellten Blockdiagramms erläutert. In Fig. 1 ist links oben eine dreidimensionale Referenzbahn wiedergegeben, wobei der dreidimensionale Raum durch die x-, y- und z-Koordinatenachsen angedeutet ist. Ferner sind auf der Referenzbahn der eingangs erwähnte Aufpunkt A sowie verschiedene Abtastwerte $\underline{x}_k$ eingetragen, wobei für k = 0, 1, 2 ... bis K-1 gilt. Ferner ist durch einen Pfeil der zurückzulegende Weg s angegeben. Bei dem erfindungsgemäßen Verfahren werden zuerst die erwähnten Abtastwerte $\underline{x}_k$ nach einem der üblichen Verfahren aufgenommen und in einem Speicher 1 gespeichert. Die gespeicherten Abtastwerte $\underline{x}_k$ werden anschließend analog der vorstehend wiedergegebenen Gl.(7) in einem Fouriertransformator 2 einer Analyse unterzogen, deren Ergebnis dann die in Gl.(8) in allgemeiner Form angegebene Fouriermatrix $_0\underline{\underline{C}}$ ist, welche in einem Referenzbahnspeicher 3 abgelegt wird.

Wenn nunmehr ein in Fig. 1 links unten schematisch dargestellter Roboter R einer Bahn folgen soll, deren Gestalt der im Referenzbahnspeicher 3 gespeicherten Bahn entspricht, deren Lage und Orientierung jedoch von der Lage und Orientierung der Referenzbahn abweicht, wird entsprechend der Gl.(10) in einem Koordinatentransformator 5 aus der abgelegten Fouriermatrix $_0\underline{\underline{C}}$ durch eine lineare Koordinatentransformation eine Fouriermatrix $_1\underline{\underline{C}}$ abgeleitet. Anschließend wird die durch die lineare Koordinatentransformation erhaltene Fouriermatrix $_1\underline{\underline{C}}$ in einem Dynamikkompensator 7 mittels des roboterspezifischen Dynamikmodells $\underline{\underline{G}}(\omega)$ (entsprechend Gl.(11)) modifiziert, wobei in dem Dynamikkompensator 7 gleichzeitig eine Anpassung an die gewünschte Bahngeschwindigkeit v vorgenommen wird. Hierdurch wird dann am Ausgang des Dynamikkompensators 7 eine modifizierte Fouriermatrix $\underline{\underline{C}}$ erhalten. Wenn die in dem Referenzbahnnspeicher 3 abgelegte Fouriermatrix $_0\underline{\underline{C}}$ sowohl einer linearen Koordinatentransformation in dem Koordinatentransformator 5 als auch einer Modifizierung durch das Roboter-Dynamikmodell in dem Dynamikkompensator 7 unterzogen werden muß, um die modifizierte Matrix $\underline{\underline{C}}$ zu erhalten, werden die Daten über schematisch angedeutete Schalter 4 und 6 geleitet, welche sich dann in den durch eine ausgezogene Linie wiedergegebenen Schalterstellungen befinden. Über die gestrichelt wiedergegebenen Schalterstellungen der Schalter 4 und 6 werden die Daten nur dann geleitet, wenn der Koordinatentransformator 5 und/oder der Dynamikkompensator 7 umgangen werden können, d. h. wenn unmittelbar der im Referenzbahnspeicher 3 abgelegten Referenzbahn von dem Roboter R gefolgt werden soll.

Die modifizierte Fouriermatrix $\underline{\underline{C}}$ am Ausgang des Dynamikkompensators 7 wird anschließend entsprechend der Gl.(6) in einem Fouriertransformator 9 einer Fourier-Synthese unterzogen, wobei die Bogenlänge s vorgegeben wird, welche durch eine Integration in einem Integrator 8 aus der gewünschten Bahngeschwindigkeit v erhalten worden ist. Die am Ausgang des Fouriertransformators 9 anliegenden Bahnkommandos $\underline{x}_c$ werden einem dem Roboter R zugeordneten Stellgrößenrechner 10 zugeführt, in welchem dann die Bahnkommandos $\underline{x}_c$ in von dem Roboter R zu verarbeitende Gelenkkommandos umgerechnet werden. Der freie Arm des Roboters R fährt dann eine Bahn ab, die in ihrer Gestalt der Referenzbahn entspricht, jedoch eine von der Referenzbahn abweichende Lage und Orientierung aufweisen kann.

Anhand von Fig. 2 soll nunmehr ein Anwendungsbeispiel des erfindungsgemäßen Verfahrens aufgezeigt werden, aus welchem zu ersehen ist, wie durch Erhöhung der Anzahl der benötigten Fourierkoeffizienten durch die Fourier-Synthese immer bessere Annäherung an die Nominaltrajektorie in Form des Buchstabens « F » erreicht werden kann. Wie erwähnt, soll die Nominaltrajektorie eine ebene Bahn in Gestalt des Großbuchstabens « F » sein. Diese Trajektorie weist scharfe Ecken auf und kann im Originalbereich durch die Koordinatenwerte der zehn Eckpunkte exakt und mit einem minimalen Speicheraufwand dargestellt werden. Das praktisch durchgeführte Anwendungsbeispiel demonstriert in anschaulicher Weise das Konvergenzverhalten der Fourierreihe und die Eigenschaft des « Abrundens » von Ecken. Hierbei ist in Fig. 2 mit M die Anzahl der bei der Fourier-Synthese verwendeten Koeffizienten angegeben, wobei die Anzahl M der Koeffizienten von M = 3 bis M = 33 reicht.

Das in Fig. 2 wiedergegebene Anwendungsbeispiel zeigt weiterhin, daß die Anzahl der zur Repräsentation benötigten Fourierkoeffizienten bei einem solchen Bahntyp größer ist als die Minimalanzahl (von zehn) der Abtastwerte im Originalbereich. Würde die Bahn in Form des Buchstabens « F » jedoch durch äquidistante Abtastwerte repräsentiert werden, wobei das Abtastintervall durch die Forderung vorgegeben ist, daß der Abtastfehler an den Ecken des Buchstabens « F » den Synthesefehler nicht überschreiten darf, so würden hierzu mehr Abtastwerte als Fourierkoeffizienten erforderlich sein.

In Fig. 3 ist die Nominalbahn eine ebene Bahn in Form eines Quadrates. Hierbei ist in Fig. 3 die Wirkung der Verwendung eines einfachen Kompensators gezeigt. Die Bahn wurde unter Verwendung eines ASEA-Roboters des Typs IRb6 durchgeführt. In Fig. 3 ist die vorgegebene Nominalbahn gestrichelt dargestellt. Durch eine ausgezogene Linie ist die Ist-Bahn bei einer Bahngeschwindigkeit von 0,27 m/s wiedergegeben, wobei die linke mit a bezeichnete Bahn ohne Kompensation und die rechte mit b bezeichnete Bahn mit einer Kompensation durchgeführt worden ist.

Bei der Ausführung wurde beobachtet, daß die Dynamik des verwendeten ASEA-Roboters IRB6 sich näherungsweise durch ungekoppelte Tiefpässe erster Ordnung für zwei zueinander senkrechte Achsrichtungen (x und y) beschreiben läßt. Als Dynamikmodell des Roboters wurde angenommen :

$$\underline{G} = \begin{bmatrix} \dfrac{1}{1 + j\omega\tau_x} & 0 \\ 0 & \dfrac{1}{1 + j\omega\tau_y} \end{bmatrix}$$

mit

$$\tau_x = 20 \text{ ms} \qquad \tau_y = 45 \text{ ms}$$

Für die m-te Kompensatormatrix gilt dann

$$\underline{G}_m^+ = \begin{bmatrix} 1 + jmv\tau_x\, 2\,\pi/L & 0 \\ 0 & 1 + jmv\tau_y\, 2\,\pi n/L \end{bmatrix}$$

wobei mit v die gewünschte Bahngeschwindigkeit und mit L die eingangs eingeführte Bahnlänge bezeichnet ist. Das in Fig. 3 wiedergegebene Anwendungsbeispiel zeigt, daß mit einem sehr einfachen Dynamikmodell bereits eine hohe Kompensationswirkung erzielt wurde.

**Patentanspruch**

1. Verfahren zur speicherplatzsparenden Programmierung von Roboterbewegungen und zur Kompensation dynamischer Bewegungsfehler bei der Ausführung der Roboterbewegungen, dadurch gekennzeichnet, daß

a) eine Referenzbahn in Form von Abtastwerten ($\underline{x}_k$ für k = 0, 1, 2 ... bis K-1) aufgenommen und gespeichert wird ;

b) diese Abtastwerte zur Reduzierung von Speicherraum durch eine Fourier-Analyse in eine Fouriermatrix ($_0\underline{C} = (c_{n,m})$ für n = 1 bis N (mit N = 3 für eine Raumkurve) und für m = 0, 1, 2, ... M) transformiert werden ;

c) die erhaltene Fouriermatrix ($_0\underline{C}$) in einem Speicher (3) abgelegt wird ;

d) aus der Fouriermatrix ($_0\underline{C}$) der Referenzbahn Fouriermatrizen für Bahnen gleicher Gestalt, jedoch beliebiger Lage und Orientierung durch eine lineare Koordinatentransformation in Form einer Fouriermatrix ($_1\underline{C}$) ableitbar sind ;

e) die Fouriermatrix ($_1\underline{C}$) durch Verwendung des Dynamikmodells ($\underline{G}(\omega)$) des verwendeten Roboters (R) geschwindigkeitsangepaßt modifiziert wird, so daß die dynamischen Bewegungsfehler des Roboters (R) kompensiert sind, und

f) zur Erstellung von Bahnkoordinaten die Fouriermatrix ($\underline{C}$) unter Vorgabe einer Bogenlänge (s) entsprechend der gewünschten Bahngeschwindigkeit (v) einer Fourier-Synthese unterzogen wird.

**Claim**

1. Method for the storage-space-saving programming of robot movements and for compensating dynamical errors of motion during the execution of robot movements, comprising the steps of :

a) recording and storing a reference course in the form of samples ($\underline{x}_k$ for k = 0, 1, 2 ... up to K-1) ;

b) transforming said samples by a Fourier analysis into a Fourier matrix ($_0\underline{C} = (c_{n,m})$ for n = 1 to N (with N = 3 for a curve in space) and m = 0, 1, 2 ... M) so as to reduce the storage space ;

c) filing the resulting Fourier matrix ($_0\underline{C}$) in a memory ;

d) deriving Fourier matrices from the Fourier matrix ($_0\underline{C}$) of the reference course for courses having the same configuration, but any desired position and orientation, in the form of a Fourier matrix ($_1\underline{C}$) by linear transformation of the coordinates ;

e) modifying the Fourier matrix ($_1\underline{C}$) with speed adjustment by utilization of the dynamical model ($\underline{G}(\omega)$) of the used robot (R) to a Fourier matrix (C), so as to compensate for the dynamical errors of motion of the robot (R), and

f) subjecting the Fourier matrix ($\underline{C}$) to a Fourier synthesis with predetermination of an arc length (s) conforming to the desired course speed (v) so as to create the coordinates of the course.

**Revendication**

1. Méthode pour réduire la mémoire occupée par le programme pour les mouvements d'un robot et pour la compensation d'erreurs de mouvements dynamiques lors de l'exécution des mouvements du robot, caractérisée en ce que

a) une voie de référence est acceptée et stockée sous forme de valeurs de balayage ($\underline{x}_k$ pour $k = 0$, 1, 2 ... jusqu'à $K-1$) ;

b) ces valeurs de balayage destinées à réduire l'encombrement de la mémoire sont transformées par une analyse de Fourier en une matrice de Fourier ($_0\underline{C} = (c_{n,m})$ pour $n = 1$ jusqu'à N (avec $N = 3$ pour une courbe spatiale) et pour $m = 0$, 1, 2, ... M) ;

c) la matrice de Fourier obtenue ($_0$C) est déposée dans une mémoire (3) ;

d) peuvent être dérivés à partir de la matrice de Fourier ($_0\underline{C}$) de la voie de référence des matrices de Fourier pour des voies de même forme, toutefois, n'importe quelle position et orientation par une transformation de coordonnées linéaires sous forme d'une matrice de Fourier ($_1\underline{C}$) ;

e) la matrice de Fourier ($_1\underline{C}$) est modifiée en utilisant la maquette dynamique ($\underline{G}(\omega)$) du robot employé (R) en fonction de la vitesse, de sorte que les erreurs de mouvements dynamiques du robot (R) soient compensées, et

f) pour l'établissement de coordonnées de voie la matrice de Fourier ($\underline{C}$), en introduisant une longueur d'arc (s) en fonction de la vitesse de voie souhaitée (v), est soumise à une synthèse de Fourier.

FIG. 1

FIG. 2

M = 3    M = 5    M = 9

FIG. 2

M = 13    M = 17    M = 33

a)    b)

FIG. 3